# EUROPÄISCHE PATENTSCHRIFT

(11) **EP 2 015 000 B1**
(45) Veröffentlichungstag und Bekanntmachung des Hinweises auf die Patenterteilung: **09.12.2015**
(21) Anmeldenummer: 08400034.8
(22) Anmeldetag: 05.07.2008
(51) Int. Cl.: F24J 2/24, F24J 2/46, F24J 2/52

(54) **Rahmen mit Solarabsorberrohr und Aufnahme**
Frame with solar absorber tube and reception means
Châssis avec un tube absorbeur solaire et moyen de réception

(30) Priorität: 09.07.2007 AT 105007 U
(43) Veröffentlichungstag der Anmeldung: 14.01.2009
(73) Patentinhaber: Vaillant GmbH, 42859 Remscheid (DE)
(72) Erfinder: Reinertz, Thomas, 42897 Remscheid (DE)
(74) Vertreter: Hocker, Thomas

(56) Entgegenhaltungen:
- EP-A- 1 775 525
- CH-A- 408 326
- DE-B4- 19 512 432

## Beschreibung

Die Erfindung bezieht sich auf einen Rahmen mit Solarabsorberrohr und Aufnahme.

Aus der Patentanmeldung EP 1 775 525 A1 ist ein Solarkollektor bekannt. Dazu werden in seitlichen Öffnungen des Rahmens des Solarkollektors als dichtende Durchführungen ausgebildete Aufnahmen vorgesehen, in die Solarabsorberrohre axial eingeschoben werden.

Der Erfindung liegt die Aufgabe zugrunde eine Fixierung eines Solarabsorberrohres zu schaffen, welche eine Montage innerhalb eines Rahmens ermöglicht.

Erfindungsgemäß wird dies gemäß den Merkmalen des unabhängigen Anspruchs dadurch gelöst, dass zur Fixierung eines Solarabsorberrohres in einem Rahmen dieser über seitliche Öffnungen verfügt, in welche elastische Aufnahmen mit zylindrischer Durchführung gesteckt und mit dem Rahmen verbunden werden. Die Aufnahmen auf der Innenseite des Rahmens verfügen über eine fast halbseitige Lücke radial zur Durchführung, so dass das Solarabsorberrohr, dessen Durchmesser dem Durchmesser der Durchführung entspricht, elastisch federnd einschiebbar und arretierbar ist.

Vorteilhafte Ausgestaltungen der Erfindung ergeben sich durch die Merkmale der abhängigen Ansprüche.

Das Rohr lässt sich gegen axiale Verschiebung sichern, indem am Ende des Solarabsorberrohres ein Flansch angeordnet ist und in der Aufnahme eine korrespondierende zylindrische Erweiterung vorhanden ist.

In das Solarabsorberrohr kann ein Stecknippel mit Doppel-O-Ring zum Anschluss des Kältemittelkreislaufs eingesteckt werden.

Als besonders vorteilhaft hat sich eine Lücke in einem Aufnahmekörper aus elastischem Kunststoff mit einen Winkel von ca. 130° herausgestellt.

Verfügt der Flansch über eine zylindrische Erweiterung, so kann ein Flansch mit Spiel gelagert aufgenommen werden. Die Dichtheit des Solarkreises erfolgt dann beispielsweise mittels O-Ringe, welche im Inneren des Flansches einen Fluidaustritt vermeiden und gleichzeitig einen Versatz eines axialen Anschlussrohes ermöglichen. Hierdurch können unter anderem Wärmedehnungen ausgeglichen werden.

Die Erfindung wird nun anhand der Figuren detailliert erläutert. Hierbei zeigen:
Figur 1 eine 3-dimensionale Ansicht einer Aufnahme zur Fixierung eines Solarabsorberrohres,
Figur 2 eine weitere 3-dimensionale Ansicht dieser Aufnahme,
Figur 3 einen Teil eines Rahmens,
Figur 4 denselben Teil des Rahmens mit der eingesetzten Aufnahme,
Figur 5 den Rahmen mit der eingesetzten Aufnahme sowie dem Solarabsorberrohr vor der Fixierung im Teilschnitt,
Figur 6 dasselbe wie Figur 5 nach der Fixierung,
Figur 7 dasselbe wie Figur 5 aus der Seitenperspektive,
Figur 8 dasselbe wie Figur 6 aus der Seitenperspektive,
Figur 9 den Rahmen mit der eingesetzten Aufnahme sowie dem Solarabsorberrohr nach der Fixierung im Teilschnitt in der Draufsicht und
Figur 10 den Rahmen mit fixiertem Solarabsorberrohr in der Draufsicht.

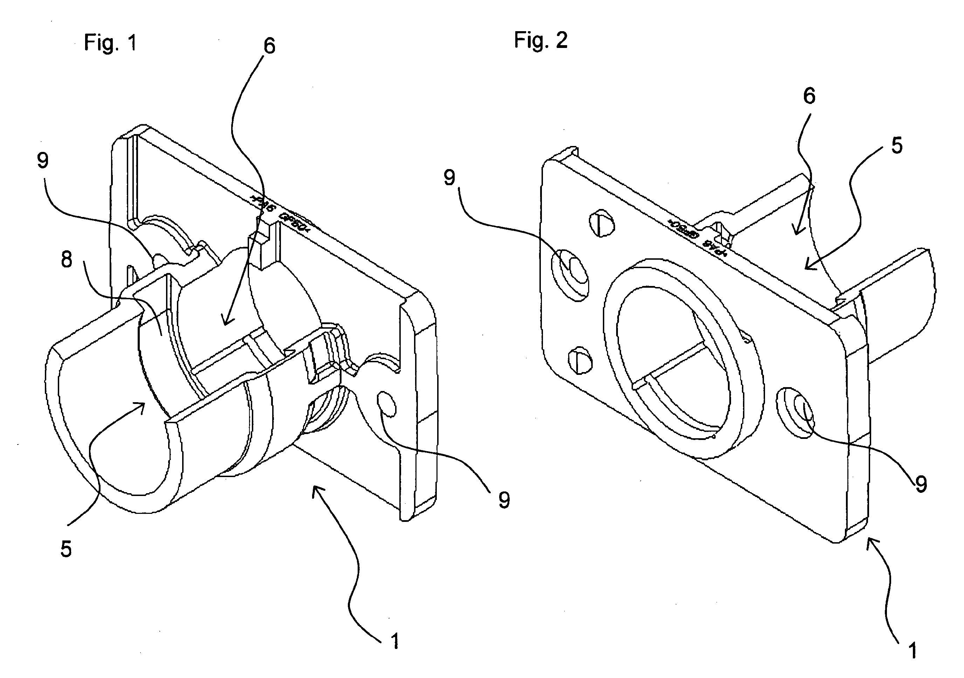

Die Figuren 1 und 2 zeigen eine Aufnahme 1 zur Fixierung eines Solarabsorberrohres mit einer runden Durchführung 5, welche eine fast halbseitige Lücke 6 aufweist. In der Aufnahme 1 befindet sich eine korrespondierende zylindrische Erweiterung 8 sowie Bohrungen 9 zur Durchführung von Befestigungsschrauben. Die Aufnahme 1 ist aus elastischem Kunststoff hergestellt, so dass die Lücke 6 unter Belastung elastisch erweitert werden kann.

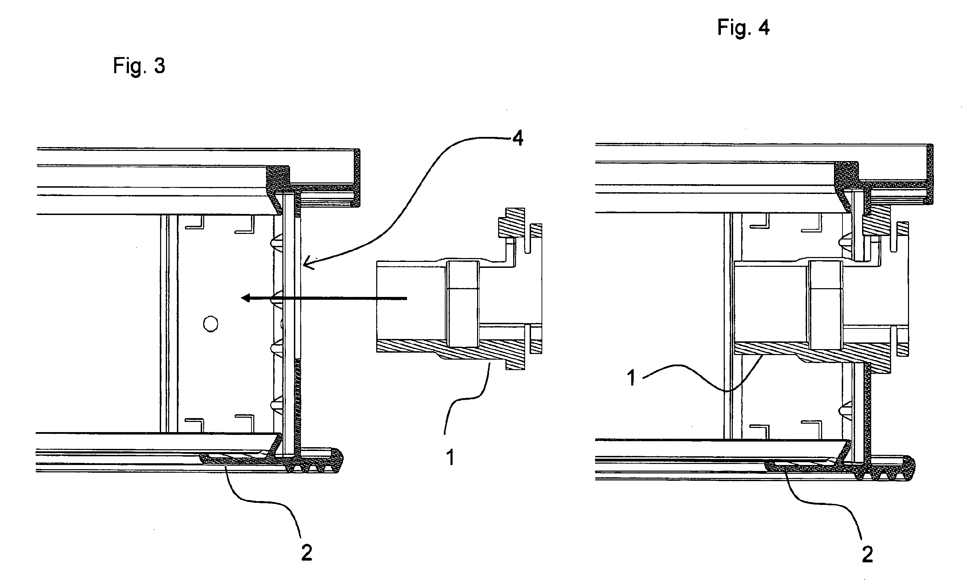

Figur 3 zeigt einen Teil eines Rahmens 2 im Schnitt mit einer Öffnung 4. In diese Öffnung kann eine Aufnahme 1 (Schnitt) von außen eingeschoben werden. Eine Aufnahme 1 in einem Rahmen 2 ist in Figur 4 dargestellt.

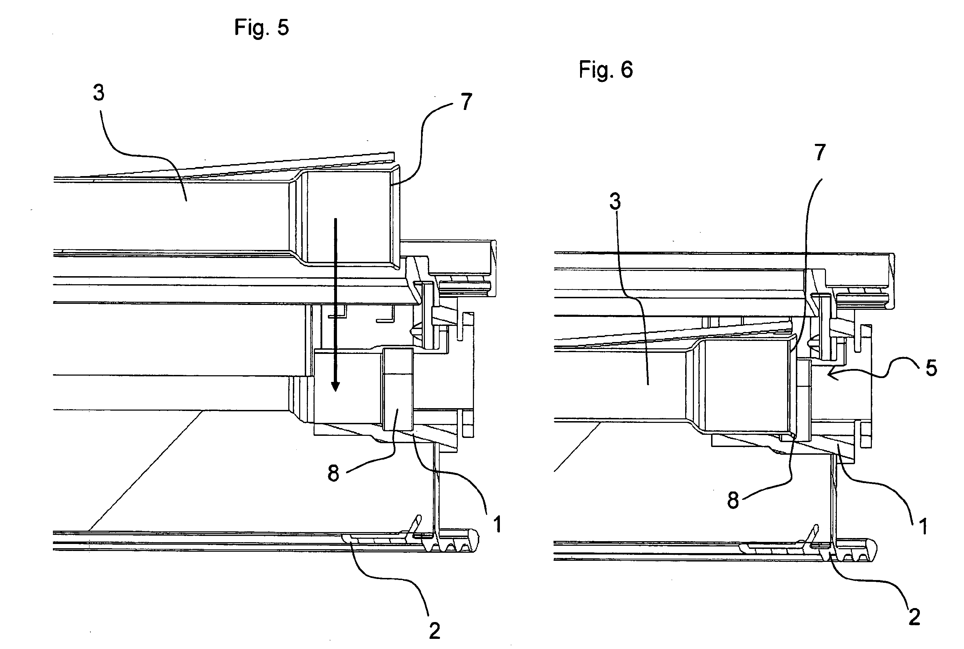

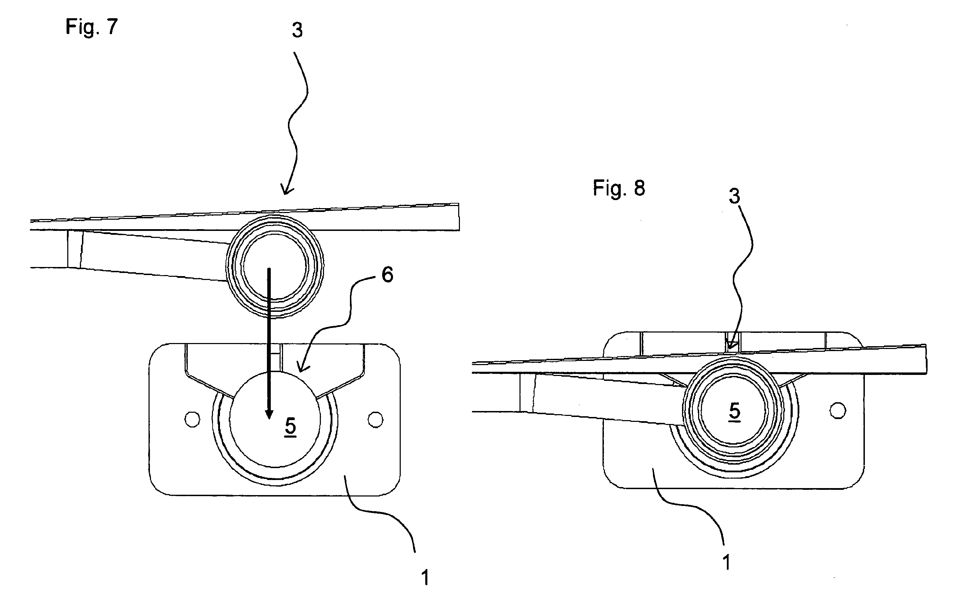

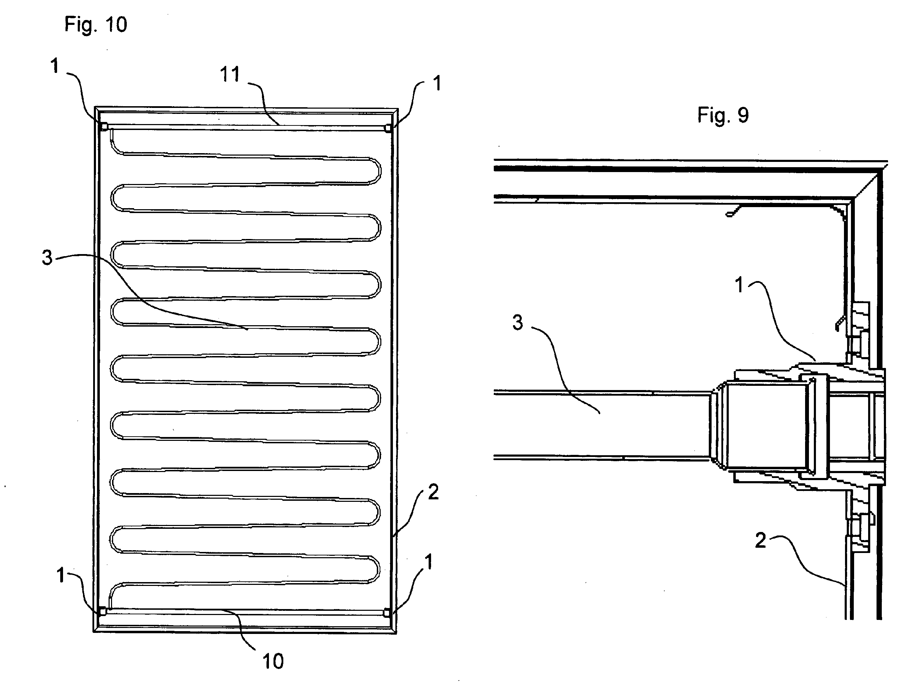

Figur 5 zeigt einen Teilschnitt des Rahmens 2 mit eingesetzter Aufnahme 1 sowie einem Solarabsorberrohr 3 mit Flansch 7 vor der Fixierung. Das Solarabsorberrohr 3 wird derart in die Aufnahme 1 gedrückt, dass das Solarabsorberrohr 3 die Lücke 6 erweitert und dadurch das Solarabsorberrohr 3 in die Durchführung 5 gelangen kann; die elastische Lücke 6 schließt sich wieder ein Stück (Einklicken), wodurch das Solarabsorberrohr 3 fest in der Aufnahme 1 fixiert ist. Der Flansch 7 liegt hierbei in der Erweiterung 8, so dass ein axiales Verschieben nur innerhalb eines kleinen Weges, welcher wegen der thermischen Dehnungen notwendig ist, möglich ist. Dieser Zustand ist in Figur 6 dargestellt. Die Figuren 7 und 8 zeigen den gleichen Sachverhalt wie die Figuren 5 und 6 aus der Seitenperspektive. Figur 9 zeigt eine Ecke eines Rahmens 2 mit fixiertem Solarabsorberrohr 3 in einer Aufnahme 1.

Letztendlich zeigt Figur 10 einen kompletten Rahmen 2 mit komplettem Solarabsorberrohr 3. An den beiden Längsseiten des Rahmens 2 befinden sich oben und unten jeweils eine Aufnahme 1. Im unteren Bereich des Rahmens 2 befindet sich die durchgehende Vorlaufsammelleitung 10 des Solarabsorberrohres 3; im oberen Bereich die durchgehende Rücklaufsammelleitung 11. Zwischen Vorlaufsammelleitung 10 und Rücklaufsammelleitung 11 verläuft das Solarabsorberrohr 3 meanderförmig.

Nach der Fixierung des Solarabsorberrohres 3 im Rahmen 2 wird letztgenannter mittels einer Glasplatte verschlossen.

Zur hydraulischen Anbindung an einen nicht dargestellten Kältemittelkreislauf wird in das Solarabsorberrohr 3 ein Stecknippel mit Doppel-O-Ring eingesteckt. Der Kältemittelkreislauf wird mit der Vorlaufsammelleitung 10 und Rücklaufsammelleitung 11 verbunden. Es können dabei mehrere Module in Reihe geschaltet werden; das letzte Modul muss in den beiden Aufnahmen an der dem Kältemittelkreislauf abgewandten Seite verschlossen werden.

## Patentansprüche

1. Rahmen (2) mit Solarabsorberrohr (3) und Aufnahme (1), wobei der Rahmen (2) über seitliche Öffnungen (4) verfügt, in welche elastische Aufnahmen (1) mit zylindrischer Durchführung (5) gesteckt und mit dem Rahmen (2) verbunden werden, **dadurch gekennzeichnet, dass** die Aufnahme (1) auf der Innenseite des Rahmens (2) über eine fast halbseitige Lücke (6) radial zur Durchführung (5) verfügt, so dass das Solarabsorberrohr (3), dessen Durchmesser dem Durchmesser der Durchführung (5) entspricht, elastisch federnd eingeschoben und arretiert ist.

2. Rahmen (2) mit Solarabsorberrohr (3) und Aufnahme (1) nach Anspruch 1, **dadurch gekennzeichnet, dass** am Ende des Solarabsorberrohres (3) ein Flansch (7) mit größerem Durchmesser als der Durchmesser des Solarabsorberrohres (3) angeordnet ist und in der Aufnahme (1) eine korrespondierende zylindrische Erweiterung (8) vorhanden ist.

3. Rahmen (2) mit Solarabsorberrohr (3) und Aufnahme (1) nach Anspruch 1 oder 2, **dadurch gekennzeichnet, dass** in das Solarabsorberrohr (3) ein Stecknippel mit Doppel-O-Ring zum Anschluss des Kältemittelkreislaufs eingesteckt wird.

4. Rahmen (2) mit Solarabsorberrohr (3) und Aufnahme (1) nach einem der Ansprüche 1 bis 3, **dadurch gekennzeichnet, dass** die Lücke (6) einen Winkel von ca. 130° aufweist.

5. Rahmen (2) mit Solarabsorberrohr (3) und Aufnahme (1) nach einem der Ansprüche 1 bis 4, **dadurch gekennzeichnet, dass** die Aufnahme (1) über eine zylindrische Erweiterung (8) verfügt, in welcher ein Flansch (7) mit Spiel gelagert aufgenommen werden kann.

## Claims

1. Frame (2) having solar absorption tubing (3) and a support (1), wherein the frame (2) has lateral openings (4), into which elastic supports (1) with cylindrical feed-throughs (5) are inserted and are connected to the frame (2), **characterised in that** the support (1) on the inner side of the frame (2) has an almost unilateral gap (6) radially to the feed-through (5), such that the solar absorption tubing (3), the diameter of which corresponds to the diameter of the feed-through (5), is inserted in an elastically flexible manner and is locked.

2. Frame (2) having solar absorption tubing (3) and a support (1) according to claim 1, **characterised in that** a flange (7) having a larger diameter than the diameter of the solar absorption tubing (3) is arranged at the end of the solar absorption tubing (3) and a corresponding cylindrical extension (8) is present in the support (1).

3. Frame (2) having solar absorption tubing (3) and a support (1) according to claim 1 or 2, **characterised in that** a plug nipple having a double O-ring is inserted into the solar absorption tubing (3) for the connection of the refrigerant circuit.

4. Frame (2) having solar absorption tubing (3) and a support (1) according to one of claims 1 to 3, **characterised in that** the gap (6) has an angle of approximately 130°.

5. Frame (2) having solar absorption tubing (3) and a support (1) according to one of claims 1 to 4, **characterised in that** the support (1) has a cylindrical extension (8), in which a flange (7) can be received, mounted with clearance.

## Revendications

1. Châssis (2) avec un tube absorbeur solaire (3) et un support (1), où le châssis (2) dispose d'ouvertures latérales (4), dans lesquelles des supports élastiques (1) avec un passage cylindrique (5) sont insérés et reliés avec le châssis (2), **caractérisé en ce que** le support (1) dispose d'une cavité (6) presque unilatérale sur la face interne du châssis (2) radialement par rapport au passage (5), de sorte que le tube absorbeur solaire (3), dont le diamètre correspond au diamètre du passage (5), est inséré de manière élastique agissant comme un ressort et est bloqué.

2. Châssis (2) avec un tube absorbeur solaire (3) et un support (1) selon la revendication 1, **caractérisé en ce qu'**une patte (7) avec un diamètre supérieur au diamètre du tube absorbeur solaire (3) est agencée à l'extrémité du tube absorbeur solaire (3) et qu'un élargissement (8) cylindrique correspondant se situe dans le support (1).

3. Châssis (2) avec un tube absorbeur solaire (3) et un support (1) selon les revendications 1 ou 2, **caractérisé en ce, qu'**un raccord enfichable avec un double joint torique est inséré dans le tube absorbeur solaire (3) pour un branchement d'un circuit de produit réfrigérant.

4. Châssis (2) avec un tube absorbeur solaire (3) et un support (1) selon l'une des revendications 1 à 3, **caractérisé en ce que** la cavité (6) présente un angle d'environ 130 °.

5. Châssis (2) avec un tube absorbeur solaire (3) et un support (1) selon l'une des revendications 1 à 4, **caractérisé en ce que** le support (1) dispose d'un élargissement cylindrique (8) dans lequel peut être reçue une patte (7), logée avec du jeu.
